Europäisches Patentamt

**European Patent Office**

Office européen des brevets

(11) Numéro de publication: **0 054 476**
**B1**

(12) **FASCICULE DE BREVET EUROPEEN**

(45) Date de publication du fascicule du brevet:
**04.06.86**

(21) Numéro de dépôt: **81401946.9**

(22) Date de dépôt: **07.12.81**

(51) Int. Cl.⁴: **F 01 P 7/04,** F 01 P 11/16,
G 05 D 23/24

(54) Circuit de sécurité pour dispositif de régulation de la température d'un fluide de refroidissement d'un moteur à combustion interne.

(30) Priorité: **10.12.80 FR 8026200**

(43) Date de publication de la demande:
**23.06.82 Bulletin 82/25**

(45) Mention de la délivrance du brevet:
**04.06.86 Bulletin 86/23**

(84) Etats contractants désignés:
**BE CH DE GB IT LI SE**

(56) Documents cités:
**DE - A - 2 331 022**
**DE - A - 2 827 373**
**FR - A - 2 179 454**
**FR - A - 2 317 488**
**FR - A - 2 378 308**
**FR - A - 2 455 174**
**US - A - 3 568 648**
**US - A - 3 924 101**

(73) Titulaire: **ACIERS ET OUTILLAGE PEUGEOT Société dite:, F-25400 Audincourt (Doubs) (FR)**

(72) Inventeur: **Barge, Jean, 42, rue d'Audincourt, F-Montbeliard (Doubs) (FR)**

(74) Mandataire: **Moncheny, Michel et al, c/o Cabinet Lavoix 2 Place d'Estienne d'Orves, F-75441 Paris Cedex 09 (FR)**

# Description

La présente invention est relative à la régulation de la température du fluide caloporteur du circuit de refroidissement d'un moteur à combustion interne.

Le circuit de refroidissement d'un moteur à combustion interne comporte, en général, un moto-ventilateur qui est alimenté soit en tout ou rien, soit en commande continue, en fonction de la température régnant dans le circuit du fluide de refroidissement. A cet effet, un capteur de température est inséré à un endroit prédéterminé du circuit de refroidissement.

Le fonctionnement à température excessive d'un moteur à combustion interne peut provoquer des dommages irrémédiables ce dont les conducteurs de véhicules automobiles ne sont souvent pas conscients. Ainsi, un moteur thermique peut être gravement endommagé lorsqu'une panne survient dans le circuit de refroidissement. Par exemple, lorsque le capteur de température qui est souvent un thermocontact fonctionne mal, le ventilateur du circuit de refroidissement peut ne pas être alimenté correctement. Ceci entraîne une augmentation très rapide de la température et cette augmentation, bien qu'elle soit affichée sur un thermomètre du tableau de bord, peut ne pas être perçue par le conducteur de sorte que le moteur à combustion interne continue de fonctionner dans des conditions de température excessive.

Si pour augmenter l'efficacité de la régulation, le circuit de refroidissement est associé à un montage plus complexe d'asservissement en température comportant un grand nombre de composants électroniques, la fiabilité de ce circuit peut être plus faible que celle d'un montage fonctionnant par tout ou rien, et dans ce cas, les risques d'endommagement du moteur augmentent en conséquence.

Le brevet US-A-3 568 648 décrit un dispositif de régulation de la température du fluide de refroidissement d'un moteur à combustion interne, destiné à être utilisé notamment dans une locomotive de chemin de fer. Ce dispositif comporte plusieurs groupes moto-ventilateurs, dont les moteurs électriques sont alimentés par l'intermédiaire de relais commandés par des boucles de réglage. L'installation comporte également un certain nombre de boucles de réglage complémentaires et notamment celle qui permet d'exciter tous les relais ensemble lorsque la température dépasse une valeur jugée dangereuse. Cependant, cette installation est d'une complexité relativement grande car les contraintes de prix de revient ne sont pas les mêmes que dans la technique automobile. De plus, ce dispositif ne permet qu'un réglage discontinu de la puissance envoyée dans le groupe moto-ventilateur.

On connaît également par les brevets DE-A-2 827 373 et FR-A-2 455 174, des dispositifs de régulation pour circuits de refroidissement permettant d'enclencher un ventilateur pour obtenir le plein effet de refroidissement lorsqu'une valeur seuil de température mesurée par un seul capteur du système est atteinte.

Le brevet US-A-3 924 101 décrit, quant à lui, un circuit de détection de température de four comportant un transistor du type MOS.

L'invention a pour but de fournir un circuit de sécurité pour un dispositif de régulation de la température du fluide caloporteur du circuit de refroidissement d'un moteur à combustion interne permettant de réduire considérablement les risques de fonctionnement à température excessive du moteur, même lorsque la régulation est réalisée au moyen d'un circuit électronique complexe.

L'invention a donc pour objet un dispositif de refroidissement d'un moteur à combustion interne, comportant au moins un groupe moto-ventilateur qui est associé au circuit du fluide caloporteur de refroidissement du moteur et dont l'alimentation est fonction d'un signal de mesure de température fourni par un capteur monté dans ledit circuit du fluide caloporteur, une première source de référence et un premier comparateur connecté par l'une de ses entrées à cette source et par l'autre de ses entrées à un point représentant ledit signal de mesure, ledit comparateur étant connecté par sa sortie à un relais dont un contact mobile est branché dans le circuit du moteur du groupe moto-ventilateur de telle manière qu'il connecte ce moteur directement à la source d'alimentation lorsque la température du fluide caloporteur atteint une valeur prédéterminée, ce dispositif de refroidissement comportant une seconde source de référence et un second comparateur dont le signal de sortie est exploité pour piloter un organe de régulation branché également dans le circuit d'alimentation du groupe moto-ventilateur pour en déterminer l'alimentation en fonction de la température, ce dispositif étant caractérisé en ce que ledit organe de régulation est un semi-conducteur de puissance destiné à assurer le réglage en continu de l'alimentation du groupe moto-ventilateur sur une plage de température prédéterminée, en ce que le contact dudit relais est monté en parallèle sur le circuit de puissance dudit semi-conducteur, et en ce que le point de consigne de la première source de référence est choisi à une valeur correspondant à la température maximale que le moteur à combustion interne peut atteindre sans détérioration.

Grâce à ces caractéristiques, on obtient un réglage continu de la puissance envoyée dans le groupe moto-ventilateur. De plus, une panne du dispositif de régulation provoque toujours l'excitation de l'organe de commutation électromagnétique, ce qui entraîne l'alimentation à pleine puissance du groupe moto-ventilateur et le refroidissement maximal du fluide caloporteur refroidissant le moteur thermique. Bien entendu, cela signifie que si une panne survient, la puissance absorbée par le groupe moto-ventilateur sera maximale, même si les conditions de régime du moteur à combustion interne n'exigent pas une telle puissance, mais il est considéré qu'il s'agit là d'un moindre mal dans la mesure où la détérioration voire la destruction du moteur à combustion interne peut être évitée.

L'invention sera mieux comprise à l'aide de la description qui va suivre, donnée uniquement à titre d'exemple et faite en se référant aux dessins annexés, sur lesquels:

— la Fig. 1 est un schéma d'un circuit de sécurité entrant dans la constitution d'un dispositif de régulation de température selon l'invention;

— la Fig. 2 représente un dispositif de régulation de température selon l'invention pour un moteur à combustion interne comportant un groupe moto-ventilateur dont le fonctionnement est asservi à une température de consigne;

— la Fig. 3 montre une autre application du circuit de sécurité dans un dispositif de régulation selon l'invention dont le fonctionnement est analogue à celui du dispositif représenté sur la Fig. 2;

— la Fig. 4 montre le branchement d'un élément de puissance connecté dans le circuit d'alimentation du moteur du groupe moto-ventilateur, circuit qui est destiné à être utilisé dans un dispositif de régulation de température selon l'invention.

Dans la description qui va suivre, l'invention sera décrite en application à un dispositif de régulation de la température d'un fluide caloporteur destiné à refroidir un moteur à combustion interne monté sur un véhicule automobile. Dans ce cas, un fluide caloporteur est amené à circuler dans le moteur en passant par un radiateur devant lequel est placé un groupe moto-ventilateur dont la vitesse est réglée en fonction des conditions de température du fluide caloporteur. Toutefois, il est à noter que l'invention s'applique également à des moteurs à refroidissement par air dans lequel la régulation de la température est obtenue en faisant varier la vitesse du ventilateur qui force l'air à passer autour du moteur. On notera également que l'invention ne se limite pas à l'utilisation dans un véhicule automobile, tout type de moteur à combustion interne qu'il soit mobile ou fixe pouvant être pourvu d'un dispositif de régulation suivant l'invention.

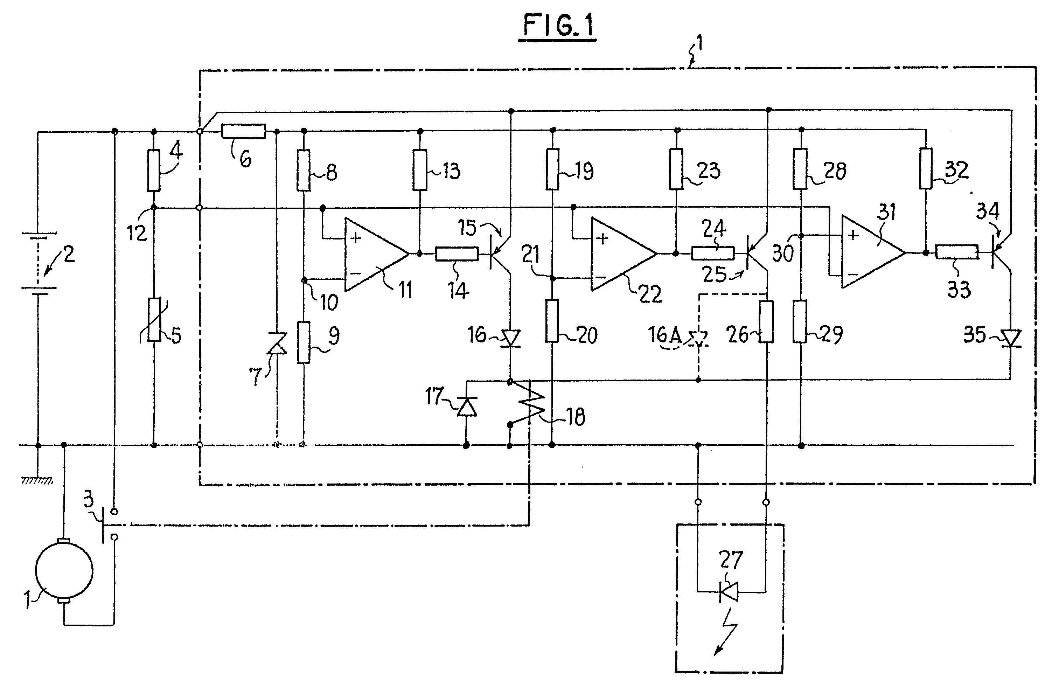

Ceci posé, la Fig. 1 montre que le moteur 1 d'un groupe moto-ventilateur est branché sur les bornes positive et négative d'une batterie 2 qui peut être celle alimentant le véhicule automobile. Un contact de travail 3 est monté en série dans ce circuit. Entre les bornes de la batterie 2 est également relié un circuit série composé d'une résistance 4 et d'une thermistance 5, cette dernière constituant un capteur de température qui peut être placé dans le circuit du fluide caloporteur pour en détecter la température et qui dans le cas d'un moteur à refroidissement par air peut détecter directement la température du moteur à combustion interne. Dans le cas représenté, la thermistance présente un cœfficient de température négatif. Les bornes de la batterie 2 sont également reliées à un régulateur de tension composé d'une résistance 6 et d'une diode Zener 7 aux bornes de laquelle apparaît une tension régulée. Celle-ci est appliquée à un diviseur de tension composé de résistances 8 et 9, le point de jonction 10 entre ces deux résistances fournissant une tension de référence fixant la température maximale du fluide caloporteur à ne pas dépasser. Le point de jonction 10 est relié à l'entrée inverseuse d'un amplificateur opérationnel 11 formant comparateur. L'entrée non inverseuse de cet amplificateur est reliée au point de jonction 12 entre la résistance 4 et la thermistance 5. La sortie du comparateur 11 est reliée à la borne positive du régulateur de tension 6,7 par l'intermédiaire d'une résistance 13 et par l'intermédiaire d'une résistance 14 à la base du transistor de commutation 15 dont le circuit émetteur collecteur est relié d'une part à la borne positive de la batterie 2 et d'autre part à une diode 16. Celle-ci est connectée par sa cathode à un point de jonction du montage en parallèle d'une diode 17 connecté par son anode à la masse et d'une bobine de relais 18 qui est couplée au contact 3 inséré dans le circuit d'alimentation du moteur 1.

La partie du montage que l'on vient de décrire fonctionne comme suit.

Lorsque la température du fluide caloporteur augmente, la résistance de la thermistance 5 diminue de sorte que le potentiel du point de jonction 12 s'abaisse. Lorsque la valeur de ce potentiel diminue en-dessous de celui fixé sur le point de jonction 10 par les résistances 8 et 9, l'amplificateur 11 bascule et rend le transistor 15 conducteur de sorte que la bobine de relais 18 est excitée. Il en résulte la fermeture du contact 3 et l'alimentation du moteur 1.

Ce processus se déroule au cours du fonctionnement normal de l'ensemble du dispositif de régulation. Cependant, lorsqu'une panne intervient par exemple par un court-circuit de la thermistance 5, le potentiel du point de jonction 12 est ramené à la masse et de ce fait l'amplificateur 11 bascule comme au cours du fonctionnement normal du circuit. Dans ce cas, le relais 18 est donc excité en permanence et le moteur 1 entraîne le ventilateur en permanence pour refroidir le fluide caloporteur. Cependant, dans ce cas de figure, si la température s'abaisse au-delà de la valeur de consigne fixée par le potentiel du point de jonction 10, le moteur 1 ne s'arrête pas. Mais, la température excessive du moteur à combustion interne est évitée.

Le circuit de sécurité comporte également un diviseur de tension composé de résistances 19 et 20 branchées sur les bornes du régulateur de tension 6,7. Le point de jonction 21 de ces résistances fournit un signal de référence dont le potentiel correspond à une température du moteur plus élevée que celle du potentiel du diviseur 8 et 9. Ce signal est appliqué à l'entrée inverseuse d'un second amplificateur opérationnel 22 dont l'entrée non inverseuse est reliée au point de jonction 12 entre la résistance 4 et la thermistance 5. La sortie de l'amplificateur 22 est reliée par une résistance 23 au régulateur de tension 6,7 et également à une résistance 24 elle-même connectée à la base d'un transistor 25 dont le circuit émetteur-collecteur est relié d'une part à la borne positive de la batterie 2 et d'autre part à une résistance série 26 connectée à un élément de signalisation 27 qui, dans le cas représenté, est une diode électroluminescente branchée par ailleurs à la masse. Cette diode électroluminescente peut être placée sur le tableau de bord du véhicule. On peut lui adjoindre d'autres éléments d'avertissement alimentés également par le transistor 25 tel qu'un bruiteur ou autre organe analogue.

Ce circuit qui fonctionne de la même façon que le circuit précédemment décrit mais a un point de consigne plus élevé pour fournir un signal d'avertissement au conducteur du véhicule lorsqu'une température prédéterminée fixée par le diviseur de tension 19,20 est dépassée. Ainsi, le conducteur du véhicule est aussitôt averti d'une surchauffe dans le circuit de refroidissement du moteur de son véhicule. Suivant une variante, il est possible de raccorder le collecteur du transistor 25 à la bobine de relais 18 par l'intermédiaire d'une diode 16A (représentée en pointillé). Dans ces conditions, en cas de surchauffe du moteur thermique, le moto-ventilateur est branché sur la batterie par l'intermédiaire du contact 3. Cette variante permet ainsi de protéger le moteur thermique même en cas de défaillance du circuit précédemment décrit (comparateur 11 et transistor 15) ou d'un autre élément du circuit et ce, même si le conducteur du véhicule tarde à réagir lorsque la diode 27 s'allume.

Le circuit de sécurité comporte également un troisième diviseur de tension composé de résistances 28 et 29 connectées entre la masse et le régulateur de tension 6, 7. Le point de jonction 30 de ce diviseur de tension est relié à l'entrée non inverseuse d'un amplificateur opérationnel 31 dont l'entrée inverseuse est reliée au point de jonction 12 entre la résistance 4 et la thermistance 5. L'amplificateur opérationnel 31 qui fonctionne également comme un comparateur est relié au régulateur de tension 6, 7 par une résistance 32 et par une résistance 33 à un transistor de commande 34 dont le circuit émetteur collecteur est relié d'une part à la borne positive de la batterie 2 et d'autre part à une diode 35 dont la cathode est reliée à l'une des extrémités de la bobine de relais 18.

Cette partie du circuit de sécurité a pour fonction d'assurer l'excitation du relais 18 et donc le fonctionnement permanent du moteur 1 du groupe moto-ventilateur lorsque la thermistance vient à être déconnectée du circuit. En effet, lorsque cela se produit, le potentiel du point de jonction 12 s'élève brusquement de sorte que l'amplificateur 31 bascule rendant conducteur le transistor 34 qui peut ainsi exciter la bobine du relais 18.

On voit donc que le moteur à combustion interne est refroidi, que la thermistance 5 soit mise en court-circuit ou déconnectée du montage.

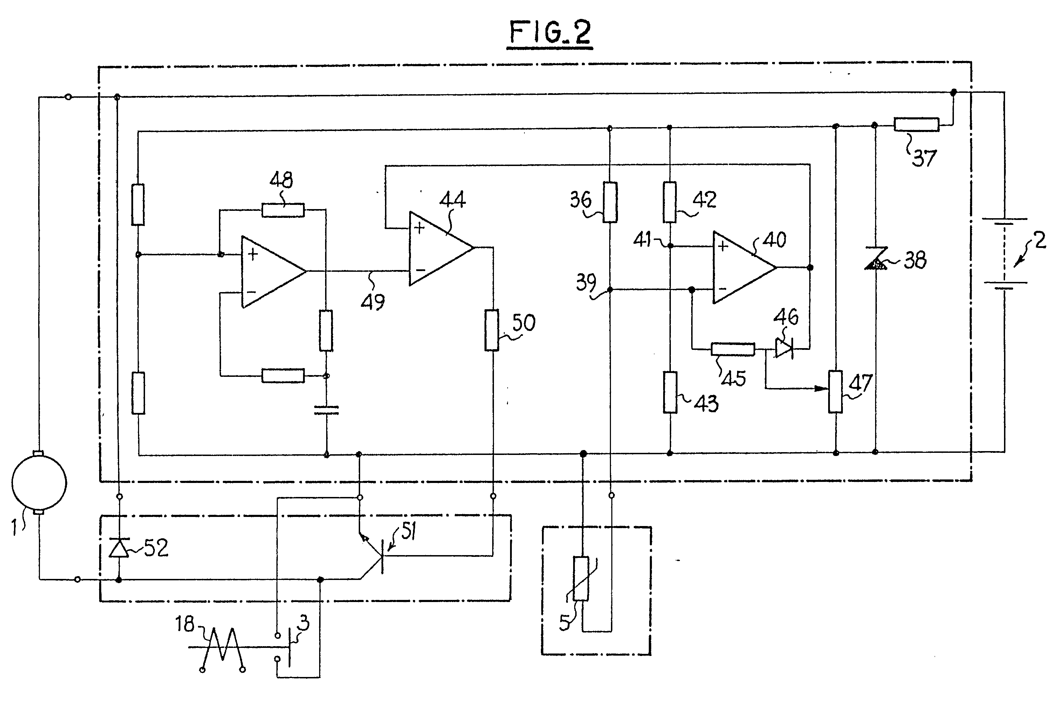

On va se référer maintenant à la Fig. 2 qui représente un dispositif de régulation utilisé avec le circuit de sécurité que l'on vient de décrire à propos de la Fig. 1. Le montage de ce dispositif de régulation est une version simplifiée de celui qui est décrit dans la demande de brevet EP-A-0 042 333 au nom de la Demanderesse. Toutefois, pour plus de clarté, on décrira maintenant brièvement ce montage et l'incidence qu'a sur lui le circuit de sécurité de la Fig. 1.

Sur la Fig. 2, on reconnaît le moteur 1 du groupe moto-ventilateur et la batterie 2 du véhicule. Une diode 52 est connectée aux bornes du moteur 1. Par ailleurs, on a représenté la bobine de relais 18 ainsi que son contact de travail 3, ces éléments étant connectés de la même façon que sur la Fig. 1 en ce qui concerne le circuit de sécurité.

Le dispositif de régulation de la Fig. 2 coopère avec une thermistance 5 à cœfficient de température négatif et cette thermistance est reliée entre le pôle négatif de la batterie 2 et une résistance 36 formant avec elle un diviseur de tension qui reçoit son alimentation à partir d'un régulateur de tension composé d'une résistance 37 et d'une diode Zener 38 et dont le point de jonction 39 reflète la température du fluide caloporteur circulant dans le moteur à combustion interne.

Ce point de jonction remplace le point 12 de la Fig. 1, le circuit de sécurité y prélevant son information de température.

Ce point de jonction 39 est relié également à l'entrée inverseuse d'un amplificateur opérationnel 40 fonctionnant en comparateur dont l'entrée non inverseuse est reliée à un point de jonction de référence 41 prévu entre deux résistances 42 et 43 branchées aux bornes du régulateur de tension 37, 38. La sortie du comparateur 40 est reliée à l'entrée non inverseuse d'un autre amplificateur opérationnel 44 décrit par la suite.

L'amplificateur opérationnel 40 est pourvu d'un circuit de contre-réaction composé d'une résistance 45, d'une diode 46 et d'un potentiomètre 47.

Le dispositif de régulation comporte également un oscillateur 48 de signaux triangulaires dont la sortie 49 est reliée à l'entrée inverseuse de l'amplificateur opérationnel 44 qui compare la tension triangulaire de sortie de l'oscillateur 48 avec la sortie de l'amplificateur opérationnel 40 pour fournir à sa sortie un signal impulsionnel dont le rapport cyclique reflète le potentiel du point de jonction 39 et donc la température du fluide caloporteur.

La sortie de cet amplificateur 44 est reliée par une résistance 50 à un circuit de puissance comportant un transistor 51 à travers lequel est alimenté le moteur 1 du groupe moto-ventilateur.

On a décrit dans la demande de brevet précitée qu'en fonctionnement normal du dispositif de régulation, le rapport cyclique des impulsions appliquées à la base du transistor 51 par l'intermédiaire de la résistance 50 croît avec la température du fluide caloporteur détectée par la thermistance 5 et provoque une rotation à vitesse progressive du moteur jusqu'à la pleine conduction du transistor de puissance 51.

Grâce à l'association du circuit de sécurité de la Fig. 1 avec le dispositif de régulation de la Fig. 2, il est possible de choisir pour le rapport cyclique maximal pouvant être fourni par le signal impulsionnel de l'amplificateur 44, une valeur qui est légèrement inférieure à 100%, de sorte qu'en régime normal, le moteur 1 ne fonctionnera pas à pleine vitesse sous la commande du dispositif de régulation, mais sous la commande du circuit de sécurité dont la température de consigne (point de jonction 10 de la Fig. 1) peut être choisie à une valeur correspondant à la température la plus élevée que le moteur thermique peut atteindre sans détérioration. Ainsi, la vitesse maximale n'est atteinte que lorsque la bobine 18 est excitée et le contact 3 fermé et elle est supérieure à la vitesse maximale que l'on peut obtenir avec le circuit décrit dans la demande de brevet précité car la chute de tension dans le transistor de puissance alimentant le moteur est supprimée par le montage suivant la présente demande. Cette chute de tension peut être de 1,5 volts pour un transistor fonctionnant avec une intensité de 30 ampères. Il en résulte que grâce à l'invention, on améliore le rendement global du dispositif de régulation car on peut supprimer la perte de puissance inhérente au transistor de puissance (1,5 × 30 = 45 Watts dans l'exemple choisi). Le montage de l'invention supprime également l'échauffement de l'organe de puissance à pleine conduction et permet de réduire la taille du radiateur qui est associé à ce transistor de puissance.

L'association du circuit de sécurité et du dispositif de régulation tel que décrit ci-dessus permet d'obtenir également les avantages suivants sur le plan de la sécurité.

Le moteur d'entraînement 1 est alimenté à sa puissance maximale pour assurer un refroidissement maximal du fluide caloporteur lorsque celui-ci atteint la température considérée comme dangereuse pour le moteur à combustion interne.

Lorsque l'étage de puissance comportant le transistor 51 est défaillant le moteur 1 fonctionne à plein régime et assure la protection du moteur à combustion interne.

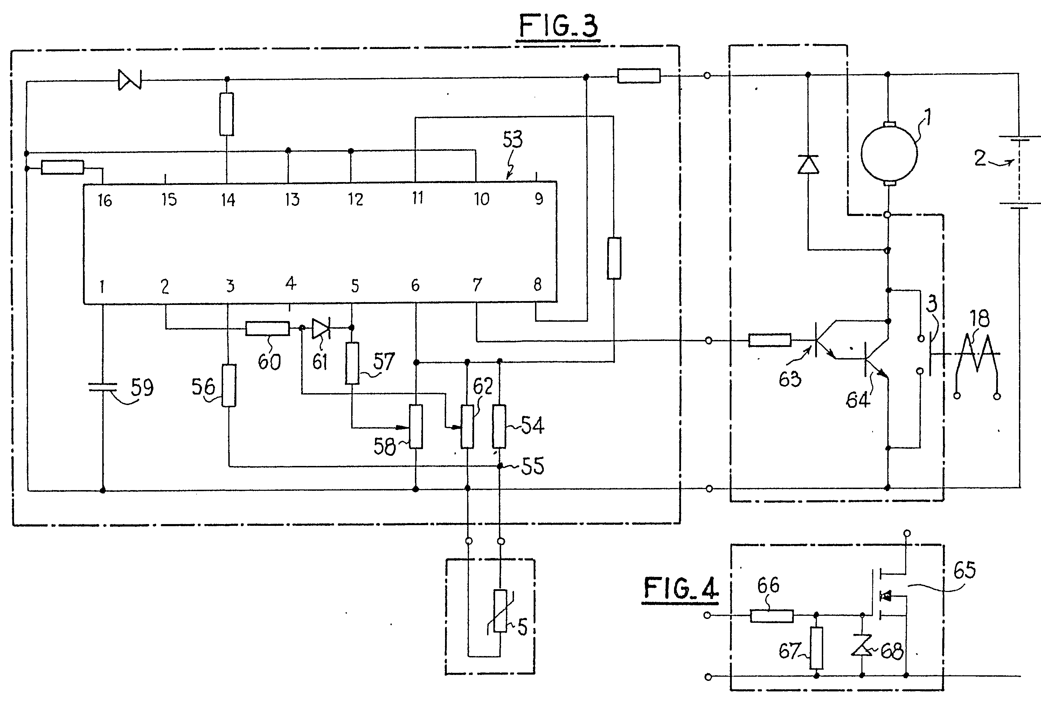

La Fig. 3 montre une variante du dispositif de régulation dans laquelle les fonctions des amplificateurs opérationnels 40, 44 et 48 de la Fig. 2 sont réalisées à l'aide d'un circuit intégré 53. (Ce dernier peut être le circuit intégré disponible dans le commerce sous la désignation L121 AB.) Ce circuit comporte seize bornes.

La borne 6 délivre une tension régulée constante.

La thermistance 5 est reliée en série avec une résistance 54 pour constituer un pont diviseur dans lequel le point de jonction 55 fournit un signal qui représente la température mesurée du fluide caloporteur. Le circuit de sécurité reçoit de ce point 55 l'information de température du fluide caloporteur.

Le point de jonction 55 est relié à la borne 3 du circuit intégré 53 par l'intermédiaire d'une résistance 56. La borne 5 du circuit intégré est reliée à un diviseur de tension composé des résistances 57 et d'une partie prédéterminée d'un potentiomètre 58 pour fournir au circuit intégré la tension de référence qui est comparée à la tension de mesure appliquée sur la borne 3 à travers la résistance 56.

Le circuit intégré 53 permet également d'engendrer une tension triangulaire dont les caractéristiques peuvent être déterminées par un condensateur 59 et une résistance 60 qui fixe également la pente de la variation de l'énergie du signal de commande disponible sur la borne 7 du circuit intégré, signal de commande qui est constitué par un train d'impulsions à rapport cyclique variable en fonction de la comparaison effectuée entre le signal de référence appliqué à la borne 5 et dit signal de mesure appliqué à la borne 3. La résistance 60 et une diode 61 raccordées entre les bornes 2 et 5 du circuit intégré sont destinées à introduire une hystérésis au niveau du comparateur de tension interne à ce circuit intégré et dont les entrées sont les bornes 3 et 5. Cette hystérésis peut être ajustée à l'aide d'un potentiomètre 62.

Le signal de sortie du circuit intégré apparaissant sur la borne 7 est appliqué à un étage de puissance 63 composé de deux transistors en montage de Darlington. Le transistor de puissance 64 de cet étage est shunté par le contact 3 commandé par la bobine de relais 18 du circuit de sécurité.

Le transistor de puissance alimentant le moteur 1 est de préférence un transistor MOS qui est avantageusement monté selon la Fig. 4 dans le circuit du moteur 1. Ce montage présente l'avantage de pouvoir être directement attaqué par le signal de mesure provenant du circuit intégré. Il comporte un transistor MOS 65 dont la grille est reliée à la borne 7 du circuit intégré 53 de la Fig. 3 par l'intermédiaire d'une résistance 66, cette grille étant également reliée à la masse par l'intermédiaire d'une résistance 67 et d'une diode Zener 68. Ce dernier composant assure la protection du transistor MOS dont l'avantage particulier est de ne pas nécessiter un transistor de préamplification. Au contraire, la résistance 66 peut être connectée directement à la borne 7 du circuit intégré 53 de la Fig. 3.

## Revendications

1. Dispositif de refroidissement d'un moteur à combustion interne, comportant au moins un groupe moto-ventilateur (1) qui est associé au circuit du fluide caloporteur de refroidissement du moteur et dont l'alimentation est fonction d'un signal de mesure de température fourni par un capteur monté dans ledit circuit du fluide caloporteur, une première source de référence (8, 9) et un premier comparateur (11) connecté par l'une de ses entrées à cette source et par l'autre de ses entrées à un point (12; 39; 55) représentant ledit signal de mesure, ledit comparateur étant connecté par sa sortie à un relais (18) dont un contact mobile (3) est branché dans le circuit du moteur (1) du groupe moto-ventilateur de telle manière qu'il connecte ce moteur directement à la source d'alimentation (2) lorsque la température du fluide caloporteur atteint une valeur prédéterminée, ce dispositif de refroidissement comportant une seconde source de référence (41) et un second comparateur (40) dont le signal de sortie est exploité pour piloter un organe de régulation (51) branché également dans le circuit d'alimentation du groupe moto-ventilateur (1) pour en déterminer l'alimentation en fonction de la température, ce dispositif étant caractérisé en ce que ledit organe de régulation (51) est un semi-conducteur de puissance destiné à assurer le réglage en continu de l'alimentation du groupe moto-ventilateur sur une plage de température prédéterminée, en ce que le contact (3) dudit relais (18) est monté en parallèle sur le circuit de puissance dudit semi-conducteur, et en ce que le point de consigne de la première source de référence est choisi à une valeur correspondant à la température maximale que le moteur à combustion interne peut atteindre sans détérioration.

2. Dispositif de refroidissement suivant la revendication 1, caractérisé en ce que ledit semi-conducteur est un transistor MOS (51).

## Claims

1. A device for cooling an internal combustion engine, comprising at least a motor-fan unit (1) which is associated with the heat-carrying cooling fluid circuit of the engine and which is supplied with power as a function of a temperature-measuring signal delivered by a sensor mounted in said heat-carrying fluid circuit, a first source of reference (8, 9) and a first comparator (11) connected by one of its inputs to this source and by the other of its inputs to a point (12; 39; 55) representing said measuring signal, said comparator being connected by its output to a relay (18) whose moving contact (3) is connected in the motor circuit (1) of the motor fan unit in such manner that it connects this motor directly to the supply source (2) when the temperature of the heat-carrying fluid reaches a predetermined value, this cooling device comprising a second reference source (51) and a second comparator (40) whose output signal is used for piloting regulating means (51) also connected in the supply circuit of the motor fan unit (1) for determining the power supply thereof as a function of the temperature, this device being characterised in that said regulating means (51) is a power semi-conductor adapted to ensure the continuous regulation of the power supply of the motor fan unit within a predetermined temperature range, the contact (3) of said relay (18) being connected in parallel with the power circuit of said semi-conductor, and the set value point of the first reference source is chosen at a value corresponding to the maximum temperature that the internal combustion engine can reach without deterioration.

2. A cooling device according to claim 1, characterised in that said semi-conductor is a MOS transistor (51).

## Patentansprüche

1. Kühlvorrichtung für eine Brennkraftmaschine, mit mindestens einer Gruppe von motorgetriebenen Ventilatoren (1), die dem Kreislauf des Kühlmittels des Motors zugeordnet ist und dessen Speisung in Abhängigkeit eines Messsignals der Temperatur erfolgt, das von einem Messfühler erfasst wird, der in dem Kühlmittelkreis angebracht ist, einer ersten Bezugsquelle (8, 9) und einem ersten Vergleicher (11), der mit einem seiner Eingänge an diese Bezugsquelle und mit dem anderen seiner Eingänge an einen Punkt (12; 39; 55) geschaltet ist, der das Messsignal wiedergibt, wobei der Vergleicher mit seinem Ausgang an ein Relais (18) geschaltet ist, dessen beweglicher Kontakt (3) in den Motorkreis (1) der Gruppe von motorgetriebenen Ventilatoren derart geschaltet ist, dass er diesen Motor direkt mit der Speisequelle (2) verbindet, wenn die Temperatur des Kühlmittels einen vorbestimmten Wert erreicht und wobei diese Kühlvorrichtung eine zweite Bezugsquelle (41) und einen zweiten Vergleicher (40) aufweist, dessen Ausgangssignal dazu verwendet wird, ein Regelorgan (51) zu betätigen, das ebenfalls in den Speisekreis der Gruppe von motorgetriebenen Ventilatoren (1) geschaltet ist, um die Speisung in Abhängigkeit von der Temperatur zu bestimmen, dadurch gekennzeichnet, dass das Regelorgan (51) ein Leistungshalbleiter ist, der dazu bestimmt ist, die gleichförmige Regelung der Speisung der Gruppe motorgetriebener Ventilatoren in einem vorbestimmten Temperaturbereich sicherzustellen, dadurch, dass der Kontakt (3) des Relais (18) parallel zu dem Leistungskreis des Halbleiters geschaltet ist und dadurch, dass der Wert des Bezugspunktes der ersten Bezugsquelle so gewählt ist, dass er der maximalen Temperatur entspricht, der die Brennkraftmaschine ausgesetzt werden kann, ohne dass sie zerstört wird.

2. Vorrichtung nach Anspruch 1, dadurch gekennzeichnet, dass der Halbleiter ein MOS-Transistor (51) ist.

# FIG.1

0 054 476

FIG.2

FIG.3

FIG.4

0 054 476